Europäisches Patentamt

(19) European Patent Office

Office européen des brevets

(11) EP 0 522 945 B1

## (12) FASCICULE DE BREVET EUROPEEN

(45) Date de publication et mention
de la délivrance du brevet:
**28.08.1996 Bulletin 1996/35**

(51) Int. Cl.⁶: **C04B 41/82**, C09D 191/06,
F16C 33/04

(21) Numéro de dépôt: **92401932.6**

(22) Date de dépôt: **06.07.1992**

(54) **Corps fritté en matériau céramique notamment pour garniture mécanique et garniture mécanique comportant un tel corps**

Keramischer Sinterkörper, insbesondere für eine Gleitringdichtung, und einen solchen Körper enthaltende Gleitringdichtung

Sintered ceramic body, especially for a mechanical seal, and a mechanical seal containing such a body

(84) Etats contractants désignés:
**DE FR GB IT**

(30) Priorité: **10.07.1991 FR 9108671**

(43) Date de publication de la demande:
**13.01.1993 Bulletin 1993/02**

(73) Titulaire: **CERAMIQUES & COMPOSITES S.A.**
**F-65460 Bazet (FR)**

(72) Inventeurs:
• **Azema, Olivier**
**F-65000 Tarbes (FR)**
• **Bougoin, Michel**
**F-65800 Aureilhan (FR)**
• **Maurin-Perrier, Philippe**
**F-69210 Lentilly (FR)**
• **Mournet, Sylvie**
**F-42240 St-Maurice-en-Gourgois (FR)**

(74) Mandataire: **Schrimpf, Robert et al**
**Cabinet Regimbeau**
**26, Avenue Kléber**
**75116 Paris (FR)**

(56) Documents cités:
**EP-A- 0 215 132**          **EP-A- 0 486 336**
**DE-A- 3 843 691**

• **PATENT ABSTRACTS OF JAPAN, vol. 12, no. 41 (M-666)(2888), 06 février 1988 & JP-A-62194024**
• **PATENT ABSTRACTS OF JAPAN, vol. 8, no. 112 (M-298)(1549), 25 mai 1984 & JP-A-59019717**
• **PATENT ABSTRACTS OF JAPAN, vol. 14, no. 311 (M-994), 04 juillet 1990 & JP-A-2102975**

Remarques:
Le dossier contient des informations techniques présentées postérieurement au dépôt de la demande et ne figurant pas dans le présent fascicule.

## Description

La présente invention concerne un corps fritté en matériau céramique, notamment en carbure de silicium utilisable en particulier dans les garnitures mécaniques. Elle concerne aussi une garniture mécanique comportant un tel corps fritté.

Les garnitures mécaniques sont des montages bien connus comprenant deux pièces, généralement deux bagues, en glissement l'une sur l'autre pour faire joint d'étanchéité d'arbre rotatif de pompe, sur des moteurs d'automobiles par exemple.

Pour ces garnitures, on utilise de plus en plus des bagues en matériaux céramiques et tout particulièrement en carbure de silicium (SiC).

Les matériaux céramiques et notamment le carbure de silicium sont des matériaux particulièrement intéressants par leur excellente résistance aux agents chimiques, par leur conductivité thermique élevée, leur grande dureté et leur très bonne résistance aux chocs thermiques.

D'autre part, les propriétés tribologiques exceptionnelles obtenues avec le carbure de silicium en particulier ont rendu possible sa généralisation dans de nombreux systèmes frottants. Toutefois, des utilisations en frottements plus sévères : frottement à sec ou en lubrification limite peuvent dégrader le matériau et poser des problèmes d'usure ou de fiabilité.

Diverses solutions ont été proposées pour améliorer la lubrification des pièces de frottement en céramiques.

Ainsi, on peut introduire des lubrifiants solides sous forme de dépôts d'épaisseurs plus ou moins grandes sur les surfaces soumises au frottement. Ces lubrifiants sont déposés soit directement sous forme de poudres, soit sous forme de compositions avec un liant inorganique ou organique, par exemple du graphite dans une résine.

A titre d'exemple, les documents antérieurs JP-A-62 194 024 et JP-A-2 102 975 décrivent des pièces mécaniques comportant un corps en carbure de silicium imprégné de lubrifiants. Il s'agit de carbure de silicium dont la porosité est ouverte.

Cependant, ces solutions ne sont pas entièrement satisfaisantes.

D'une part, le coefficient de frottement des pièces en céramique ainsi lubrifiées reste relativement élévé. D'autre part, les lubrifiants ont tendance à être éliminés rapidement, notamment dans le cas du frottement à sec.

L'objet principal de l'invention est, par conséquent, la mise au point d'un corps fritté en matériau céramique présentant un coefficient de frottement et une usure faibles.

Un autre objet de l'invention est un corps fritté en matériau céramique pouvant être utilisé en outre à la fois en frottement à sec et dans un liquide.

Dans ce but, le corps fritté selon l'invention, comprend un matériau céramique poreux et il est caractérisé en ce que ledit matériau est imprégné d'une cire.

D'autres caractéristiques et détails de l'invention apparaîtront plus clairement à la lecture de la description qui va suivre et des dessins annexés dans lesquels :

- la figure 1 est une courbe donnant l'évolution du coefficient de frottement d'un matériau de l'invention dans l'eau puis à sec;
- la figure 2 est une courbe du même type pour un matériau de l'art antérieur.

Le corps fritté selon l'invention est constitué au moins en partie d'un matériau céramique poreux qui va maintenant être décrit plus précisément.

Les caractéristiques de ce matériau qui vont être données ci-dessous notamment quant à la porosité, s'appliquent au matériau avant l'imprégnation.

Différents types de matériaux céramiques peuvent être employés.

On peut citer l'alumine, la zircone, l'alumine-zircone, le nitrure d'aluminium, le nitrure de silicium et tout particulièrement le carbure de silicium.

En ce qui concerne le carbure de silicium, il faut noter qu'on peut utiliser le SiC $\alpha$ ou le SiC $\beta$ ou encore des combinaisons de ces deux polytypes dans des proportions quelconques.

Les matériaux céramiques peuvent comprendre en outre tous les additifs habituels et bien connus de frittage, comme par exemple l'oxyde d'yttrium, le spinelle et l'alumine pour le nitrure de silicium, l'oxyde d'yttrium pour le nitrure d'aluminium, le carbone, le bore, l'aluminium pour le SiC ou encore les stabilisants de la zircone tels que les oxydes d'yttrium, de magnésium, de calcium ou de cérium.

L'invention s'applique aussi aux corps frittés dans lesquels les matériaux céramiques peuvent être du type composite, c'est-à-dire à base de plusieurs phases et notamment à base de carbone libre en particulier sous forme graphite et/ou de nitrure de bore. Ainsi, on peut mentionner les composites SiC/C, nitrure de silicium/nitrure de bore, nitrure d'aluminium/nitrure de bore, alumine/nitrure de bore.

Ainsi, on peut envisager notamment des composites SiC/C comprenant jusqu'à 48% en poids de carbone libre, notamment jusqu'à 20% et plus particulièrement jusqu'à 10%, ce carbone pouvant se présenter sous forme d'un mélange carbone amorphe - carbone graphite dans des proportions quelconques.

Enfin, le corps fritté est à base d'un matériau céramique dont la taille des grains est habituellement comprise entre 1 et 500µm, et de préférence entre 1 et 30µm.

Le matériau céramique du corps fritté selon l'invention doit être poreux.

Ainsi, celui-ci doit présenter une porosité d'au moins 4%. La porosité pour l'ensemble de la description, sauf précision contraire, est la porosité totale, c'est-à-dire celle obtenue en prenant en compte les pores ouverts et fermés.

$$\text{Cette porosité (P) exprimé en \% est égale à } 100 - \frac{100d}{d_1}.$$

d étant la masse volumique apparante du corps et $d_1$ étant celle théorique du matériau céramique, $d_1$ valant 3,21 dans le cas du SiC.

Dans le cas particulier d'un composite SiC/C, cette formule serait :

$$P = 100 - d \left[ \frac{x}{2,25} + \frac{100 - x}{3,21} \right]$$

d étant tel que défini précédemment et x étant le pourcentage massique de carbone libre contenu dans le matériau; 2,25 étant la masse volumique du carbone libre et 3,21 celle du carbure de silicium. On aurait bien entendu une formule semblable pour les composites du type décrits plus haut.

De préférence, les pores du corps selon l'invention se présentent sous une forme sphérique ou sous une forme voisine de la sphère.

D'autre part, ces pores sont essentiellement des pores fermés.

Par pores fermés, on entend des pores séparés les uns des autres ou qui ne communiquent pas entre-eux par des cavités ou des canaux. La porosité fermée correspond à la porosité résultant de l'ensemble des pores fermés, la porosité ouverte correspond elle à celle résultant de l'ensemble des pores non fermés.

Comme indiqué plus haut, la porosité du matériau résulte essentiellement de la porosité fermée. Plus particulièrement, selon un mode de réalisation préféré, la porosité ouverte est inférieure à 4%, plus particulièrement d'au plus 0,5% et de préférence nulle.

La porosité totale minimale du matériau de l'invention est d'au moins 4%. Une porosité inférieure ne serait pas suffisante pour assurer une imprégnation efficace du SiC par la cire.

La limite supérieure de la porosité est imposée par le fait que cette porosité doit être essentiellement de la porosité fermée.

Généralement, la porosité ne dépasse pas 25%, et préférentiellement 18%.

Selon un mode de réalisation particulier, la porosité sera comprise entre 5 et 15% et notamment entre 8 et 15%, ceci s'appliquant notamment tout particulièrement au cas du SiC.

En ce qui concerne les pores du corps fritté, ceux-ci ont généralement un diamètre moyen d'au moins 1µm.

Ce diamètre moyen est celui obtenu sur la base de valeurs mesurées par examen au microscope électronique à balayage.

En dessous d'un diamètre moyen d'1µm, il n'est pas possible d'effectuer une imprégnation efficace du corps fritté par la cire.

Le diamètre moyen peut toutefois varier dans de larges proportions jusqu'à 500µm, par exemple, entre 10 et 500µm.

Cependant, on utilise généralement les corps frittés dont le diamètre moyen de pores est compris entre 10 et 200µm.

C'est généralement en deçà d'un diamètre moyen de 200µm, que la résistance mécanique du corps fritté est optimale.

La demande de brevet français n° 90 12783 décrit un corps fritté poreux à base de SiC qui peut être utilisé avantageusement dans le cadre de la présente invention, compte tenu de sa bonne résistance mécanique. Ce matériau a un diamètre moyen de pores d'au moins 50µm, et plus particulièrement d'au moins 60µm. Selon différents modes de réalisation, ce corps fritté présente un diamètre moyen de pores compris entre 50 et 200µm, et plus particulièrement 60 et 200µm.

Selon un autre mode de réalisation encore plus particulier, le matériau peut avoir une valeur maximale du diamètre des pores de 150µm, et plus particulièrement une valeur qui se situe dans la gamme 40 - 150µm.

Une première variante qui vient d'être décrite ci-dessus correspond au cas où le matériau céramique poreux imprégné constitue, pour l'essentiel, le corps fritté de l'invention.

Une deuxième variante est aussi envisageable dans laquelle le corps fritté comprend une première zone en matériau céramique poreux imprégné d'une cire, et une seconde zone en un second matériau céramique non poreux.

Cette variante permet d'offrir un corps fritté ayant une résistance mécanique améliorée et garantissant une bonne étanchéité des garnitures même à des vitesses de rotation élevées.

Cette seconde variante correspond à l'invention qui a fait l'objet de la demande de brevet français n° 91 02135 au nom de la Demanderesse et dont l'enseignement est incorporé ici. Elle va être décrite plus précisément.

En ce qui concerne tout d'abord la nature des matériaux céramiques, on notera que le second matériau formant la seconde zone peut être identique au matériau formant la première zone ou différent de celui-ci.

En cas d'utilisation de matériaux différents, il est préférable que ces matériaux obéissent à des conditions de frittage qui soient compatibles.

Différents types de céramiques peuvent être employés pour la seconde zone.

On peut citer les matériaux à base d'alumine, de zircone, d'alumine-zircone, de nitrure d'aluminium (AlN), de carbure de bore $B_4C$.

Toutefois, selon un mode de réalisation préféré de cette seconde variante, on peut mentionner le nitrure de silicium ($Si_3N_4$) et le carbure de silicium (SiC). Pour ce dernier, on peut utiliser le SiC $\alpha$ ou le SiC $\beta$ ou encore des combinaisons de ces deux polytypes dans des proportions quelconques.

Bien entendu, les matériaux céramiques de la seconde zone peuvent comprendre en outre tous les additifs habituels et bien connus de frittage, tels que décrits plus haut dans le cadre de la première variante.

L'invention s'applique aussi aux corps frittés dans lesquels les matériaux précités de la seconde zone peuvent être du type composite.

Dans ce dernier cas, ce qui a été dit plus haut au sujet des composites dans le cadre de la première variante, s'applique aussi ici.

Selon un mode de réalisation préféré, la première zone poreuse constitue une zone superficielle, en surface de la seconde zone. C'est sur cette zone superficielle que s'effectue le glissement avec l'autre pièce.

La zone poreuse présente, de préférence, une épaisseur d'au moins 20 $\mu$m, plus particulièrement d'au moins 50 $\mu$m et notamment comprise entre 100 et 1000 $\mu$m.

En ce qui concerne la porosité, la nature des pores et les diamètres moyens de ceux-ci, ce qui a été décrit pour le matériau poreux de la première variante s'applique de même ici.

Par ailleurs, au sujet du matériau constituant la seconde zone non poreuse, celui-ci présente une densité aussi élevée que possible. Ce matériau a de préférence une porosité totale inférieure à 4 %.

Enfin, il est à noter qu'une caractéristique du corps de l'invention selon la seconde variante, réside dans la continuité parfaite qui existe entre les deux zones, tout particulièrement dans le cas où ces deux zones sont constituées du même matériau. On peut observer ainsi une absence totale de fissures entre les zones, on ne peut pas distinguer une discontinuité entre celles-ci.

Une caractéristique essentielle du corps fritté de l'invention réside dans le fait que le SiC poreux est imprégné d'une cire.

L'imprégnation ne pourra concerner que les pores qui communiquent avec la surface de la pièce, c'est-à-dire essentiellement des pores coupés par la surface.

Les cires sont des substances solides à température ambiante qui, lorsqu'elles sont soumises à une augmentation de température, se transforment à une température appelée point de goutte en un liquide à faible viscosité.

On pourra utiliser dans le cadre de la présente invention les cires animales, végétales ou minérales. Dans ce dernier cas, il s'agit notamment des dérivés du pétrole et on peut mentionner les cires du type ozokérites, montan, paraffines, semimicroscristallines ou microcristallines.

Les cires synthétiques sont aussi utilisables. Il s'agit en particulier des cires de polyéthylène de poids moléculaire généralement inférieur à 10 000; des produits résultants de la synthèse Fisher - Tropsh du type par exemple polyméthylène; des produits à base d'hydrocarbures modifiées chimiquement par oxydation à l'air ou réaction avec un acide polycarboxylique puis par saponification ou estérification; des copolymères d'éthylène, propylène, butadiène et acide acrylique; des polymères fluorés à chaîne courte.

Le choix de la cire pourra se faire notamment à partir de son point de goutte.

Le point de goutte de la cire devra être supérieur à la température de l'environnement du corps fritté. La température de l'environnement du corps fritté sera celle du milieu, par exemple du liquide, dans lequel est placé le corps fritté, lors de son utilisation, dans le dispositif où il est monté, par exemple dans une garniture mécanique, en régime stabilisé.

De préférence, l'écart entre le point de goutte et la température d'environnement doit être d'au moins 30°C, plus particulièrement d'au moins 40°C. Le point de goutte sera déterminé par la méthode Ubbelohde norme AFNOR T60-102.

D'autres critères pourront rentrer en ligne de compte pour le choix de la cire. Notamment, on peut mentionner la réactivité vis-à-vis de l'environnement dans lequel sera placé le corps fritté, ainsi que la viscosité de la cire à l'état liquide.

Selon une autre variante de l'invention, la cire n'est pas utilisée telle quelle, mais incorporée dans un polymère.

Les pores du matériau poreux seront alors remplis du polymère comprenant la cire.

Le polymère pourra être choisi par son coefficient de dilation. Celui-ci devra être inférieur à celui que présente la cire lorsqu'elle est à son point de goutte de manière à permettre l'exsudation de la cire lors de l'utilisation du corps fritté.

D'une manière générale, on utilisera des polymères à réseau peu réticulé choisis par exemple parmi les polyoléfines, les polymères vinyliques, acryliques, les résines glycérophtaliques.

Enfin, on pourra utiliser en combinaison avec la cire les additifs lubrifiants minéraux connus.

On peut citer par exemple le graphite, le fluorure de calcium, le bisulfure de molylbdène, les silicates, les polyphosphazènes, les fluorures de terres-rares, c'est-à-dire les éléments de la famille des lanthanides ayant un numéro atomique allant de 57 à 71 ainsi que l'yttrium.

Le procédé de préparation des corps frittés selon l'invention va maintenant être décrit.

On ne rentrera pas dans le détail en ce qui concerne la préparation même des matériaux céramiques frittés, et particulièrement du SiC car cette préparation est bien connue de l'homme de l'art et ne constitue pas l'objet de l'invention.

En ce qui concerne le matériau céramique poreux, celui-ci peut être obtenu par un procédé qui consiste à ajouter un agent porogène sous forme de microbilles ou de granulés au mélange des produits destinés à la préparation du matériau fritté

La mise en oeuvre de l'agent porogène peut se faire de plusieurs manières. Par exemple, on peut former dans un broyeur à boulets une barbotine à base du matériau céramique de départ, des additifs de frittage et d'un liant, dans l'eau ou dans un solvant organique. A cette barbotine, on ajoute ensuite sous agitation l'agent porogène. On sèche enfin par atomisation.

Une autre manière consiste à former puis à sécher une barbotine du type décrit ci-dessus, mais sans l'agent porogène. Au produit sec ainsi obtenu, on mélange alors à sec cet agent.

Les agents porogènes utilisables sont bien connus. Ce sont généralement des produits organiques du type polymère. On utilise de préférence des produits obtenus à partir d'une polymérisation en émulsion. Ces produits ne doivent pas être solubles dans l'eau ou le solvant organique utilisé dans la composition de la barbotine. Ils doivent aussi pouvoir supporter thermiquement le séchage par atomisation notamment.

On peut citer comme exemple le polystyrène, le polyméthacrylate de méthyle, le polyamide.

L'étape ultérieure du procédé est la mise en forme. Celle-ci peut être réalisée par toute technique connue appropriée, telle qu'extrusion ou coulage en barbotine.

Cette mise en forme peut aussi se faire par pressage isostatique ou uniaxial des produits secs obtenus précédemment.

Ce pressage se déroule d'une manière connue en soi.

Après la mise en forme, on obtient une pièce crue et d'une manière connue, on traite thermiquement cette pièce crue afin d'éliminer les liants, l'agent porogène et, de pyrolyser le précurseur du carbone additif de frittage.

La pièce est frittée ensuite d'une manière connue en soi.

La température de frittage dépend du matériau et se situe généralement entre 1900 et 2500°C, et plus particulièrement entre 2000 et 2200°C. On procède sous vide ou sous azote ou gaz neutre.

Pour le cas de la fabrication d'un corps fritté selon la seconde variante de l'invention, c'est-à-dire un corps comprenant un matériau poreux en combinaison avec un matériau céramique dense, on peut procéder de différentes manières.

Par exemple, dans le cas d'un pressage uniaxial, on peut remplir dans un premier temps le moule de pressage d'une première couche de produit sec contenant le porogène, puis dans un deuxième temps disposer sur cette première couche une certaine quantité de produit sec exempt de porogène.

Une autre méthode de mise en forme peut être utilisée par coulage d'une première barbotine comprenant du porogène dans un moule en plâtre, puis dans un deuxième temps par coulage dans le même moule d'une barbotine sans porogène.

On procède ensuite au traitement thermique pour l'élimination des liants, des porogènes ainsi qu'au frittage de la même manière que décrite ci-dessus.

A l'issue de ce traitement, le produit fritté est soumis aux opérations éventuelles de rectification et/ou rodage.

Le prbduit fritté obtenu doit ensuite être imprégné de la cire ou éventuellement du polymère incorporant la cire.

On peut utiliser ici toute technique d'imprégnation convenable. Ainsi, on peut tremper le corps fritté dans un bain de cire fondu ou dans un mélange de cire et de solvant comprenant éventuellement les additifs lubrifiants mentionnés plus haut.

La cire peut aussi être pulvérisée sur le corps fritté.

Après imprégnation, le produit peut subir une trempe pour éliminer le surplus de cire ou de mélange polymère - cire ou traité thermiquement pour éliminer le solvant.

L'invention concerne aussi les garnitures mécaniques comportant deux pièces en glissement l'une par rapport à l'autre, dont au moins une des pièces est constituée du corps fritté qui vient d'être décrit ci-dessus.

Ces pièces sont généralement des bagues dont l'une est fixe et l'autre rotative.

Les deux bagues peuvent être constituées du corps fritté selon l'invention. Sinon l'autre bague peut être en nitrure de silicium ou en alumine frittée. Ce peut être encore un matériau en carbone ou de type métallique par exemple acier.

Bien entendu, le corps fritté de l'invention peut être utilisé dans d'autres applications que les garnitures mécaniques.

Le corps fritté de l'invention peut être utilisé dans des paliers par exemple.

Ainsi, il peut servir dans tout système frottant du type par exemple butée, palier ou glissière comportant au moins une pièce en frottement constituée par ledit corps ou dont une partie est constituée dudit corps. On peut ainsi l'employer par exemple dans des paliers et dans les configurations suivantes : alésage en corps fritté - arbre métallique, alésage en corps fritté - arbre en corps fritté, alésage en corps fritté - arbre métallique avec chemise en corps fritté ou graphite.

Des exemples vont maintenant être donnés.

### EXEMPLE 1

#### Préparation de bagues en SiC

On forme une première barbotine de SiC à 60% d'extrait sec dans l'eau comprenant 1% de bore, une résine phénolique apportant 1,5% de carbone après pyrolyse et 3% de polyéthylène glycol. Cette première barbotine contient à titre de porogène 6% en poids par rapport au SiC de PLEXIGUM M 914 (polyméthacrylate de méthyle) de taille moyenne des grains de 90µm.

Le porogène a été mélangé à la barbotine sous agitation.

Une seconde barbotine est préparée identique à la première, mais sans agent porogène.

Les barbotines sont ensuite séchées et granulées par atomisation.

On introduit dans un moule de pressage les produits secs ainsi obtenus. on presse ensuite à 1500 bars pour obtenir deux pièces crues.

Après un traitement thermique sous azote jusqu'à 600°C qui permet notamment l'élimination du porogène et la pyrolyse de la résine phénolique, les pièces sont ensuite frittées à 2070°C sous argon pendant 1 heure.

On obtient une bague 1 (issue de la première barbotine) et une bague 2 (issue de la seconde barbotine). Elles présentent toutes les deux un diamètre interne de 25 mm, un diamètre externe de 35 mm et une épaisseur totale de 20 mm.

Les bagues sont ensuite imprégnées d'une cire par immersion dans un bain de celle-ci.

La cire utilisée est vendue sous la dénomination "Victory" par la société Pétrolite. Il s'agit d'une cire microcristalline, son point de goutte est 50 - 60°C.

La bague 1 présente une porosité de 12%, le diamètre moyen des pores est de 80µm.

La bague 2 présente une porosité de 3,4%.

#### Essais en frottement

Les bagues sont mises en rotation, puis viennent s'appuyer le long de leur génératrice sur une pièce plane constituée du même matériau en SiC poreux.

La vitesse de rotation des bagues est de 150 t/mn, la charge normale appliquée est de 2daN. Les coefficients de frottement sont mesurés dans le plan de frottement par l'intermédiaire d'un capteur de force lié à la pièce plane. Les résultats sont donnés ci-dessous. Le coefficient donné est celui mesuré dans des conditions stabilisées au bout d'1 heure pour la bague 1 imprégnée. Dans les trois autres cas, les essais ont été arrêtés volontairement au bout de 0,5 heure par suite des dégradations subies par les surfaces frottantes.

| | Bague 1 | | Bague 2 | |
|---|---|---|---|---|
| | Non imprégnée | Imprégnée | Non imprégnée | Imprégnée |
| Coefficient de frottement | 0,65 | 0,07 | 0,85 | 0,55 |
| Aspect des surfaces après essai | (1) | (2) | (1) | (1) |
| (1) Dégradation généralisée des surfaces : abrasion, fracturation. (2) Aspect poli | | | | |

Ces résultats font bien apparaître une diminution très importante du coefficient de frottement pour le produit de l'invention.

En outre, on notera qu'au bout de 24 h d'essai, pour la bague 1, le coefficient de frottement mesuré est identique à celui donné dans le tableau.

EXEMPLE 2

Cet exemple permet de comparer les résultats d'un produit selon l'invention par rapport à un produit de l'art antérieur dans des conditions de frottement à sec ou mixte : en immersion totale dans l'eau, puis à sec.

La bague utilisée est la bague 1.

Dans le cadre de l'essai A, la bague est imprégnée de la même cire que dans l'exemple 1.

Dans le cadre de l'essai B, la bague est imprégnée du produit GRAPHLUB 1 ® vendu par la Société TECHNIQUES SURFACES. Il s'agit d'un vernis lubrifiant à base de graphite dans du polyimide.

Les essais se font avec le même montage que celui décrit à l'exemple 1 avec des vitesses et des charges identiques. Ils sont conduits à sec pendant 1/2 heure, puis dans l'eau à température ambiante pendant 1 heure, ensuite, après vidange du système, de nouveau à sec.

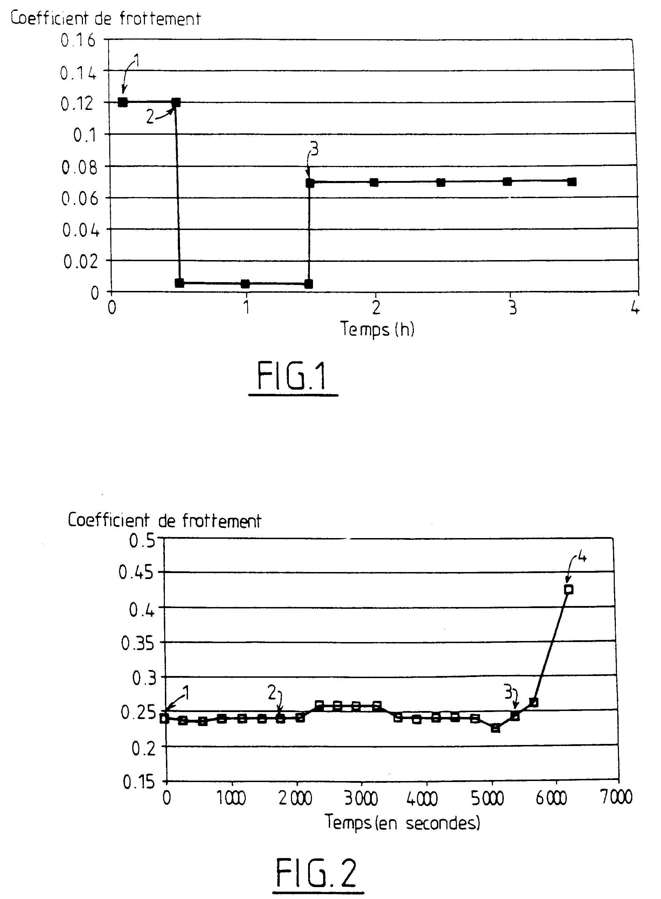

La figure 1 correspond à l'essai A.

Au démarrage à sec (partie de la courbe commençant au point 1), le coefficient est de 0,12. Il chute à une valeur inférieure à 0,01 pendant le frottement dans l'eau (partie commençant au point 2 de la courbe). Lors du frottement à sec (partie de la courbe commençant au point 3), il remonte et se stabilise à 0,07.

La figure 2 correspond à l'essai B.

On a repéré par les mêmes chiffres les différents modes de lubrification.

On voit ainsi qu'en frottement à sec puis dans l'eau, le coefficient reste à une valeur d'environ 0,25 très supérieure aux deux valeurs correspondantes de l'essai A.

Ensuite dès la vidange du système, le coefficient augmente très rapidement sans se stabiliser. L'essai a été arrêté au point 4.

Les comportements des deux produits dans les conditions de l'essai sont donc complètement différents.

**Revendications**

1. Corps fritté comprenant un matériau céramique poreux, caractérisé en ce que ledit matériau est imprégné d'une cire et en ce que ces pores sont essentiellement des pores fermés, leur diamètre moyen étant d'au moins 1 µm, plus particulièrement compris entre 10 et 200 µm.

2. Corps fritté selon la revendication 1, caractérisé en ce que le matériau céramique est choisi dans le groupe comprenant l'alumine, la zircone, l'alumine zircone, le nitrure d'aluminium, le nitrure de silicium, le carbure de silicium.

3. Corps fritté selon la revendication 1 ou 2, caractérisé en ce que le matériau céramique présente une porosité d'au moins 4 %, plus particulièrement comprise entre 4 et 25 %, et de préférence entre 4 et 18 %.

4. Corps fritté selon la revendication 3, caractérisé en ce que le matériau céramique présente une porosité comprise entre 5 et 15 %.

5. Corps fritté selon l'une des revendications précédentes, caractérisé en ce que le matériau céramique présente des pores de forme sphérique ou voisine de la sphère.

6. Corps fritté selon l'une quelconque des revendications précédentes, caractérisé en ce que le matériau céramique est le carbure de silicium et il présente des pores dont le diamètre moyen est compris entre 50 et 200 µm, plus particulièrement entre 60 et 200 µm.

7. Corps fritté selon l'une quelconque des revendications précédentes, caractérisé en ce qu'il comprend une première zone en un premier matériau céramique poreux imprégné d'une cire et une seconde zone en un second matériau céramique non poreux.

8. Corps fritté selon l'une quelconque des revendications précédentes, caractérisé en ce que le second matériau céramique précité est à base d'au moins un composé choisi parmi l'alumine, la zircone, l'aluminezircone, le nitrure d'aluminium, le carbure de bore, le carbure de silicium et le nitrure de silicium.

9. Corps fritté selon l'une quelconque des revendications précédentes, caractérisé en ce que la cire est incorporée dans un polymère.

**10.** Garniture mécanique comportant deux pièces en glissement l'une par rapport à l'autre, caractérisée en ce que au moins une desdites pièces est constituée du corps fritté selon l'une des revendications 1 à 9.

**11.** Système du type butée, palier ou glissière comportant au moins une pièce en frottement constituée par un corps fritté selon l'une des revendications 1 à 9 ou dont une partie est constituée dudit corps.

## Claims

**1.** Sintered body comprising a porous ceramic material, characterized in that the said material is impregnated with a wax and in that these pores are essentially closed pores, their average diameter being at least 1 $\mu$m, more particularly lying between 10 and 200 $\mu$m.

**2.** Sintered body according to Claim 1, characterized in that the ceramic material is chosen from the group comprising alumina, zirconia, alumina zirconia, aluminium nitride, silicon nitride and silicon carbide.

**3.** Sintered body according to Claim 1 or 2, characterized in that the ceramic material has a porosity of at least 4%, more particularly lying between 4 and 25% and preferably between 4 and 18%.

**4.** Sintered body according to Claim 3, characterized in that the ceramic material has a porosity of between 5 and 15%.

**5.** Sintered body according to one of the preceding claims, characterized in that the ceramic material has pores of spherical shape or a shape close to that of a sphere.

**6.** Sintered body according to any one of the preceding claims, characterized in that the ceramic material is silicon carbide and it has pores whose average diameter is between 50 and 200 $\mu$m, more particularly between 60 and 200 $\mu$m.

**7.** Sintered body according to any one of the preceding claims, characterized in that it comprises a first zone made of a porous first ceramic material impregnated with a wax and a second zone made of a non-porous second ceramic material.

**8.** Sintered body according to any one of the preceding claims, characterized in that the aforementioned second ceramic material is based on at least one compound chosen from alumina, zirconia, alumina-zirconia, aluminium nitride, boron carbide, silicon carbide and silicon nitride.

**9.** Sintered body according to any one of the preceding claims, characterized in that the wax is incorporated into a polymer.

**10.** Mechanical seal which includes two components, one sliding with respect to the other, characterized in that at least one of said components consists of the sintered body according to one of Claims 1 to 9.

**11.** System of the stop, bearing or slideway type including at least one rubbing component which consists of a sintered body according to one of Claims 1 to 9 or part of which consists of said body.

## Patentansprüche

**1.** Sinterkörper, der ein poröses Keramikmaterial enthält, dadurch gekennzeichnet, daß das genannte Material mit einem Wachs imprägniert ist und daß die Poren im wesentlichen geschlossene Poren sind, deren mittlerer Durchmesser mindestens 1 $\mu$m beträgt, insbesondere zwischen 10 und 200 $\mu$m liegt.

**2.** Sinterkörper nach Anspruch 1, dadurch gekennzeichnet, daß das Keramikmaterial ausgewählt wird aus der Gruppe, die besteht aus Aluminiumoxid, Zirkoniumoxid, Aluminiumoxid-Zirkoniumoxid, Aluminiumnitrid, Siliciumnitrid und Siliciumcarbid.

**3.** Sinterkörper nach Anspruch 1 oder 2, dadurch gekennzeichnet, daß das Keramikmaterial eine Porosität von mindestens 4 % aufweist, insbesondere zwischen 4 und 25 %, vorzugsweise zwischen 4 und 18 %, liegt.

**4.** Sinterkörper nach Anspruch 3, dadurch gekennzeichnet, daß das Keramikmaterial eine Porosität zwischen 5 und 15 % aufweist.

**5.** Sinterkörper nach einem der vorhergehenden Ansprüche, dadurch gekennzeichnet, daß das Keramikmaterial Poren aufweist, die kugelförmig oder nahezu kugelförmig sind.

**6.** Sinterkörper nach einem der vorhergehenden Ansprüche, dadurch gekennzeichnet, daß das Keramikmaterial Siliciumcarbid ist und daß es Poren aufweist, deren mittlerer Durchmesser zwischen 50 und 200 μm, insbesondere zwischen 60 und 200 μm, liegt.

**7.** Sinterkörper nach einem der vorhergehenden Ansprüche, dadurch gekennzeichnet, daß er eine erste Zone aus einem ersten, mit Wachs imprägnierten porösen Keramikmaterial und eine zweite Zone aus einem zweiten nicht-porösen Keramikmaterial umfaßt.

**8.** Sinterkörper nach einem der vorhergehenden Ansprüche, dadurch gekennzeichnet, daß das genannte zweite Keramikmaterial ein solches auf Basis mindestens einer Verbindung ist, die ausgewählt wird aus der Gruppe Aluminiumoxid, Zirkoniumoxid, Aluminiumoxid-Zirkoniumoxid, Aluminiumnitrid, Borcarbid, Siliciumcarbid und Siliciumnitrid.

**9.** Sinterkörper nach einem der vorhergehenden Ansprüche, dadurch gekennzeichnet, daß das Wachs einem Polymer einverleibt wird.

**10.** Mechanische Dichtung, die zwei aufeinander gleitende Elemente umfaßt, dadurch gekennzeichnet, daß mindestens eines der genannten Elemente aus einem Sinterkörper nach einem der Ansprüche 1 bis 9 besteht.

**11.** System vom Widerlager-, Radiallager- oder Gleitlager-Typ, das mindestens ein Reibungselement aufweist, das vollständig oder zum Teil aus einem Sinterkörper nach einem der Ansprüche 1 bis 9 besteht.

Coefficient de frottement

FIG.1

Coefficient de frottement

FIG.2